# EUROPÄISCHE PATENTANMELDUNG

(11) **EP 4 477 793 A1**
(43) Veröffentlichungstag der Anmeldung: **18.12.2024**
(21) Anmeldenummer: 24181165.2
(22) Anmeldetag: 10.06.2024
(51) Int. Cl.: D06F 39/02, D06F 39/08, G01F 23/24, A47L 15/42, A47L 15/44

(54) **SENSORSYSTEM FÜR EIN FLÜSSIGKEITSFÜHRENDES HAUSHALTSGERÄT SOWIE HAUSHALTSGERÄT MIT DEM SENSORSYSTEM**

(30) Priorität: 12.06.2023 DE 102023115244; 29.02.2024 DE 102024105827
(71) Anmelder: emz-Hanauer GmbH & Co. KGaA, 92507 Nabburg (DE)
(72) Erfinder: Schade, Lukas, 92507 Nabburg (DE); Signorino, Manfredi, 92442 Wackersdorf (DE); SPIEßL, Georg, 92540 Altendorf (DE); Kleber, Johann, 92507 Nabburg (DE)
(74) Vertreter: Hannke, Christian

(57) **Zusammenfassung**

Sensorsystem (10) für ein flüssigkeitsführendes Haushaltsgerät (2), insbesondere eine Waschmaschine, wobei das Sensorsystem (10) zumindest ein Detektionselement (12) zur Detektion eines Wärmestroms umfasst und ausgelegt ist, das zumindest eine Detektionselement (12) im Haushaltsgerät (2) neben einem zur Aufnahme von Flüssigkeit ausgelegten Raumbereich (14) so anzuordnen, dass das zumindest eine Detektionselement (12) einen Wärmestrom zwischen dem zumindest einen Detektionselement (12) und dem Raumbereich (14) detektieren kann, der einen Füllstand von Flüssigkeit, insbesondere Waschflüssigkeit, in dem Raumbereich (14) anzeigt.

## Beschreibung

Die Erfindung befasst sich mit einem Sensorsystem für ein flüssigkeitsführendes Haushaltsgerät, sowie mit einem Haushaltsgerät mit ebendiesem Sensorsystem.

Es ist bekannt, zur Messung eines Füllstands bzw. Pegels einer Flüssigkeit in einem Behälter optische Sensoren oder Ultraschallsensoren einzusetzen. Auch bei flüssigkeitsführenden Haushaltsgeräten wie z.B. Waschmaschinen, Geschirrspülmaschinen und Eisbereitern kann der Pegel bzw. Füllstand einer Flüssigkeit in einem Raumbereich von Interesse sein. Der mit Flüssigkeit füllbare Raumbereich kann im Fall einer Waschmaschine von einem Waschmittelbehälter eingefasst sein, im Fall einer Geschirrspülmaschine von einem Geschirr- oder Klarspülmittelbehälter und im Fall eines Eisbereiters von einem Wasservorratsbehälter. Da es sich bei Haushaltsgeräten um Massenware handelt, die in millionenfacher Stückzahl gefertigt wird, sollten die Kosten für etwaige Sensorik zur Füllstandsmessung möglichst geringgehalten werden. Daher sind die oben genannten bekannten Füllstandmesssensoren für einen Einsatz in Haushaltsgeräten untauglich.

Es ist eine Aufgabe der Erfindung, eine kostengünstiges Sensorsystem für ein flüssigkeitsführendes Haushaltsgerät bereitzustellen, das ein Ermitteln eines Flüssigkeitsfüllstands ermöglicht.

Erfindungsgemäß sind ein Sensorsystem gemäß Anspruch 1 sowie ein Haushaltsgerät mit einem solchen Sensorsystem vorgesehen.

Das Sensorsystem umfasst zumindest ein Detektionselement zur Detektion eines Wärmestroms und ist ausgelegt, das zumindest eine Detektionselement im Haushaltsgerät neben einem zur Aufnahme von Flüssigkeit ausgelegten Raumbereich so anzuordnen, dass das zumindest eine Detektionselement einen Wärmestrom zwischen dem zumindest einen Detektionselement und dem Raumbereich detektieren kann, der einen Füllstand von Flüssigkeit (z.B. Waschmittel, Geschirrspülmittel, Frisch- oder Brauchwasser) in dem Raumbereich anzeigt. Anstelle einer optischen oder akustischen Erfassung des Füllstands kann also der Wärmestrom zwischen dem zumindest einen Detektionselement und dem Raumbereich herangezogen werden, um auf den Füllstand der Flüssigkeit schließen zu können. Wenn der neben dem Detektionselement liegende Raumbereich frei von Flüssigkeit, also gasgefüllt ist, dann kann Abwärme von dem Detektionselement weniger rasch abgeführt werden. Wenn hingegen der neben dem Detektionselement liegende Raumbereich mit Flüssigkeit gefüllt ist, dann kann die Abwärme entsprechend rascher abgeführt werden. Die zur Detektion des Wärmestroms einsetzbaren Detektionselemente sind vergleichsweise kostengünstig.

In bestimmten Ausführungsformen ist das Sensorsystem dazu ausgelegt, das zumindest eine Detektionselement auf einer vorbestimmten Höhe neben dem Raumbereich so anzuordnen, dass das zumindest eine Detektionselement einen Wärmestrom zwischen dem zumindest einen Detektionselement und dem Raumbereich detektieren kann, der anzeigt, ob der Füllstand die vorbestimmte Höhe unterschreitet oder überschreitet. In anderen Worten kann das zumindest eine Detektionselement der vorbestimmten Höhe und damit auch einem vorbestimmten Füllstand zugeordnet sein. Für den Fall, dass das zumindest eine Detektionselement aus mehreren Detektionselementen besteht, kann das Sensorsystem ausgelegt sein, ein jedes Detektionselement auf einer anderen Höhe neben dem Raumbereich anzuordnen. Die Detektionselemente können in regelmäßigen Abständen bzw. Höhen neben dem Raumbereich angeordnet werden. Der Einsatz mehrerer Detektionselemente mit voneinander abweichenden vorbestimmten Höhen kann eine genauere Bestimmung des Füllstands der Flüssigkeit ermöglichen, insbesondere wenn jedes Detektionselement nur dazu genutzt wird, um zu bestimmen, ob der Füllstand die dem jeweiligen Detektionselement zugeordnete vorbestimmte Höhe aktuell über- oder unterschreitet.

In bestimmten Ausführungsformen ist das zumindest eine Detektionselement dazu eingerichtet, durch Versorgung mit elektrischer Energie erwärmt oder/und abgekühlt zu werden und ein Messsignal bereitzustellen, das eine Temperatur des Detektionselements anzeigt. Das zumindest eine Detektionselement kann die Temperatur anhand des elektrischen Widerstands eines Widerstandselements, anhand eines durch das Widerstandselement fließenden Stroms oder/und anhand einer über das Widerstandselement abfallenden Spannung anzeigen. Das Messsignal kann also einen aktuellen elektrischen Zustand (z.B. einen elektrischen Widerstand, einen durchfließenden Strom oder/und eine abfallende Spannung) des Widerstandselements oder/und Detektionselements, ein zu diesem aktuellen elektrischen Zustand proportionales Signal, oder eine aktuell gemessene Temperatur anzeigen. So kann das zumindest eine Detektionselement gezielt erwärmt oder/und abgekühlt werden bei gleichzeitiger Erfassung von dessen Temperatur. Das Detektionselement kann den Wärmestrom detektieren, indem es ein Messsignal bereitstellt, dass Temperaturen zu unterschiedlichen Zeitpunkten eines Heiz- oder/und Kühlzyklus anzeigt.

In bestimmten Ausführungsformen kann die Detektionseinheit durch ein einzelnes elektrisches Bauteil gebildet sein, insbesondere kann die Detektionseinheit ein (NTC- oder PTC-) Thermistor, eine Diode oder ein Transistor sein. Auch durch diese Maßnahmen wird ein besonders kostengünstiges Sensorsystem ermöglicht.

In bestimmten Ausführungsformen umfasst das Sensorsystem eine Leiterplatte mit einem Hauptabschnitt und zumindest einem von dem Hauptabschnitt abstehenden fingerförmigen Fortsatz, der das zumindest eine Detektionselement trägt. In dieser oder anderen Ausführungsformen ist der zumindest eine fingerförmige Fortsatz ausgelegt, sich von dem Hauptabschnitt der Leiterplatte in Richtung des Raumbereichs des Haushaltsgeräts zu erstrecken. Alternativ oder zusätzlich können zwei oder mehr des zumindest einen fingerförmigen Fortsatzes im Wesentlichen parallel verlaufen. Auf diese Weise kann der Hauptabschnitt von dem zumindest einen Detektionselement zumindest teilweise thermisch entkoppelt sein, sodass das Detektionselement einen Großteil seiner Abwärme nicht an den Hauptabschnitt, sondern an den benachbarten Raumabschnitt abgeben kann. So kann ein Typ und eine Änderung des im neben dem Detektionselement angeordneten Raumbereich befindlichen Mediums rascher detektiert werden, was wiederum eine schnelle und genaue Bestimmung des Füllstands einer Flüssigkeit im Raumbereich gestattet.

In bestimmten Ausführungsformen ist das zumindest eine Detektionselement auf einer Leiterplatte (z.B. der Leiterplatte mit dem Hauptabschnitt und dem zumindest einen fingerförmigen Fortsatz) angeordnet und bildet ein erstes Widerstandselement eines Spannungsteilers der zumindest zwei Widerstandselemente umfasst, wobei ein oder mehr, insbesondere alle, der weiteren Widerstandselemente des Spannungsteilers getrennt von der Leiterplatte angeordnet sind. Es ist denkbar, dass die Leiterplatte außer dem zumindest einen Detektionselement kein weiteres elektrisches Bauelement trägt, sondern nur eine oder mehrere Leiterbahnen sowie eine elektrische Schnittstelle, beispielsweise in Form eines Steckkontakts. Auf diese Weise kann eine besonders kostengünstige Leiterplatte bereitgestellt werden.

In bestimmten Ausführungsformen umfasst das Sensorsystem ferner eine Trennwand, wobei das Sensorsystem ausgelegt ist, das zumindest eine Detektionselement im Haushaltsgerät durch die Trennwand getrennt von dem Raumbereich anzuordnen, wobei die Trennwand optional zumindest einen Teil eines Flüssigkeitsbehälters bildet, der den Raumbereich einfasst. Das Sensorsystem kann auch den Flüssigkeitsbehälter umfassen. Auf diese Weise kann sichergestellt werden, dass das zumindest eine Detektionselement oder/und die Leiterplatte nicht in Kontakt mit einer Flüssigkeit im Raumbereich kommt. Dies ermöglicht den Einsatz flüssigkeitsempfindlicher elektrischer Bauteile als Detektionselement und gestattet den Einsatz offenliegender Leiterbahnen auf der Leiterplatte, was die Kosten des Sensorsystems weiter reduzieren kann.

In bestimmten Ausführungsformen weist die Trennwand zumindest eine Ausstülpung auf, die in Richtung des Raumbereichs ausgebildet ist, wobei das zumindest eine Detektionselement in der zumindest einen Ausstülpung angeordnet ist. Insbesondere kann eine jede Ausstülpung zur Aufnahme eines jeweiligen fingerförmigen Fortsatzes der Leiterplatte ausgebildet sein. Das zumindest eine Detektionselement kann also auf mehreren Seiten von der Trennwand umgeben sein. So wird sichergestellt, dass Abwärme von dem zumindest einen Detektionselement über eine möglichst große Grenzfläche in den Raumbereich abgeführt werden kann. Hierdurch wird der Wärmestrom zwischen dem zumindest einen Detektionselement und dem Raumbereich besonders stark von dem Medium im Raumbereich beeinflusst, was letztendlich eine zuverlässigere Detektion des Füllstands ermöglicht.

In bestimmten Ausführungsformen umfasst das Sensorsystem ferner eine Steuereinheit, die dazu eingerichtet ist, eines oder mehrere Messsignale des zumindest einen Detektionselements zu erhalten und daraus einen Wert zu bestimmen, der den von dem zumindest einen Detektionselement detektierten Wärmestrom oder/und den Füllstand von Flüssigkeit im Raumbereich anzeigt. Die Steuereinheit kann an der Leiterplatte befestigt, z.B. auf der Leiterplatte angeordnet sein. Alternativ ist denkbar, dass die Steuereinheit über eine Kabelverbindung mit der Leiterplatte elektrisch verbunden ist. In letzterem Fall kann die Steuereinheit einer zentralen Steuerung des Haushaltsgeräts entsprechen. Das Vorsehen einer derartigen Steuereinheit ermöglicht insbesondere den Einsatz besonders einfacher und kostengünstiger Detektionselemente, da die Datenverarbeitung auf die allen Detektionselementen gemeinsame Steuereinheit ausgelagert ist.

In bestimmten Ausführungsformen ist die Steuereinheit dazu eingerichtet, ein Erwärmen oder/und Abkühlen das zumindest einen Detektionselements zu bewirken, und basierend auf einem durch das bzw. die Messsignale angezeigten Temperaturverhalten des Detektionselements den Wert zu bestimmen. Es ist denkbar, dass die Steuereinheit das zumindest eine Detektionselement durch Versorgung mit elektrischer Energie erwärmt, wobei das angezeigte Temperaturverhalten einen aktuellen elektrischen Zustand des zumindest einen Detektions- oder/und Widerstandselements (z.B. einen Durchgangsstrom durch das entsprechende Element, eine aktuell über das entsprechende Element abfallende Spannung und/oder einen elektrischen Widerstand des entsprechenden Elements) oder/und eine aktuellen Temperatur des zumindest einen Detektionselements zu einem oder mehreren vorbestimmten Zeitpunkten (z.B. vor, nach oder/und während) der Erwärmung umfasst. Ferner kann die Steuereinheit das Erwärmen des zumindest einen Detektionselements zu einem Endzeitpunkt beenden, wobei das angezeigte Temperaturverhalten dann einen aktuellen elektrischen Zustand oder/und eine aktuellen Temperatur des zumindest einen Detektionselements zu einem oder mehreren vorbestimmten Zeitpunkten nach dem Endzeitpunkt umfasst. Die Steuereinheit kann dazu eingerichtet sein, basierend auf dem durch das bzw. die Messsignale angezeigten Temperaturverhalten eine thermische Trägheit des Detektionselements zu bestimmen, die wiederum von dem Medium in dem neben dem Detektionselement angeordneten Raumbereich beeinflusst ist, und anhand der thermischen Trägheit den Wert bestimmen. Die Steuereinheit kann also eine aktive Temperaturänderung des zumindest einen Detektionselements bewirken und durch Analyse des Temperaturverhaltens des zumindest einen Detektionselements in Abhängigkeit von der Zeit oder/und der zur Erwärmung bereitgestellten elektrischen Energie den Wert bestimmen. Dies ermöglicht unter anderem, auch dann einen Wärmestrom zu detektieren, wenn das zumindest eine Detektionselement und das Medium im Raumbereich anfangs dieselbe Temperatur aufweisen.

Nach einer bevorzugten Ausführungsform ist wird zumindest ein Detektionselement aus einer Mehrzahl von Detektionselementen als Referenzdetektionselement betrieben. Das Sensorsystem umfasst somit vorteilhafterweise zumindest zwei Detektionselemente. Vorzugsweise ist das als Referenzdetektionselement betriebene Detektionselement gleichartig zu den übrigen Detektionselementen ausgebildet. Vorteilhafterweise detektiert dieses zumindest eine Referenzdetektionselement einen Wärmestrom zwischen dem zumindest einen Referenzdetektionselement und dem Raumbereich. Alternativ oder kumulativ detektiert dieses zumindest eine Referenzdetektionselement einen Wärmestrom zwischen dem zumindest einen Referenzdetektionselement und einer Umgebung. Vorzugsweise ist das zumindest eine Referenzdetektionselement nicht dafür vorgesehen ist einen Wärmestrom zwischen dem zumindest einen Referenzdetektionselement und einer sich in dem Raumbereich befindlichen Flüssigkeit zu detektieren. Vorzugsweise detektiert das zumindest eine Referenzdetektionselement lediglich einen Wärmestrom zwischen dem zumindest einen Referenzdetektionselement und dem anstatt der Flüssigkeit sich in dem Raumbereich befindlichen Medium, welches vorzugsweise Luft beziehungsweise ein Gasgemisch ist. Vorzugsweise ist das Referenzdetektionselement derart angeordnet, dass ein Wärmestrom zu der Flüssigkeit nicht möglich ist. Dies kann beispielsweise durch eine Anordnung über einem maximalen Füllstand erfolgen.

Vorzugsweise wird bei einer Auswertung ein Verhältnis beziehungsweise der Quotient des Messwertes des Referenzdetektionselement und des Messwertes des zumindest einen weiteren Detektionselements gebildet.

Nach einer weiteren bevorzugten Ausführungsform umfasst das Sensorsystem mehrere Detektionselemente, welche in Reihe geschaltet sind. Vorzugsweise bilden die Detektionselemente Widerstandselemente eines Spannungsteilers mit zumindest einem weiteren Widerstandselement. Vorteilhafterweise wird der Strom dieser Reihenschaltung zur Auswertung verwendet. Alternativ oder kumulativ wird eine Änderung des Stromes dieser Reihenschaltung zur Auswertung verwendet.

Nach einer weiteren bevorzugten Ausführungsform ist zumindest ein Widerstandselement vorgesehen, welches geeignet und dafür vorgesehen ist das zumindest eine Detektionselement zu erwärmen. Ein solches Widerstandselement wird auch als Heizwiderstand bezeichnet. Tritt durch einen (ohmsches) Widerstandselement elektrischer Strom wird Wärme freigesetzt und an die Umgebung abgegeben. Vorteilhafterweise ist das zur Wärmeabgabe vorgesehene zumindest eine Widerstandselement räumlich nah an dem zumindest einen Detektionselement angeordnet Bevorzugt liegt das zur Wärmeabgabe vorgesehene zumindest eine Widerstandselement an dem zumindest einen Detektionselement an. Hierdurch wird eine effektive Wärmeübertragung ermöglicht. Vorteilhafterweise ist das zumindest eine Widerstandselement in Reihe oder parallel zu dem zumindest einen Detektionselement geschalten.

Es wird ferner ein Haushaltsgerät bereitgestellt, insbesondere eine Waschmaschine, welches das hier beschriebene Sensorsystem umfasst. Der den Raumbereich begrenzende Flüssigkeitsbehälter kann entweder fest in dem Haushaltsgerät eingebaut oder aus dem Haushaltsgerät entnehmbar sein. Die Leiterplatte kann an dem Flüssigkeitsbehälter befestigt sein. Alternativ ist denkbar, dass die Leiterplatte so an dem Haushaltsgerät befestigt ist, dass sie bei einem Einbau des Flüssigkeitsbehälters in einer vorbestimmten Relativposition zum Flüssigkeitsbehälter angeordnet wird, insbesondere so dass der zumindest eine fingerförmige Fortsatz in der zumindest einen Ausstülpung zum Liegen kommt.

Die Erfindung wird nachstehend anhand der beigefügten Zeichnungen weiter erläutert. Es stellen dar:
- Figur 1: eine schematische Ansicht einer Haushalts-Waschmaschine gemäß einem Ausführungsbeispiel;
- Figur 2: ein Sensorsystem gemäß einem Ausführungsbeispiel;
- Figur 3: ein Ausführungsbeispiel einer Auswertungsschaltung;
- Figur 4: zwei beispielhafte Messsignale; und
- Figur 5: eine schematische Ansicht mehrerer möglicher Anordnungen eines Detektionselements eines Sensorsystems an einem Flüssigkeitsbehälter.

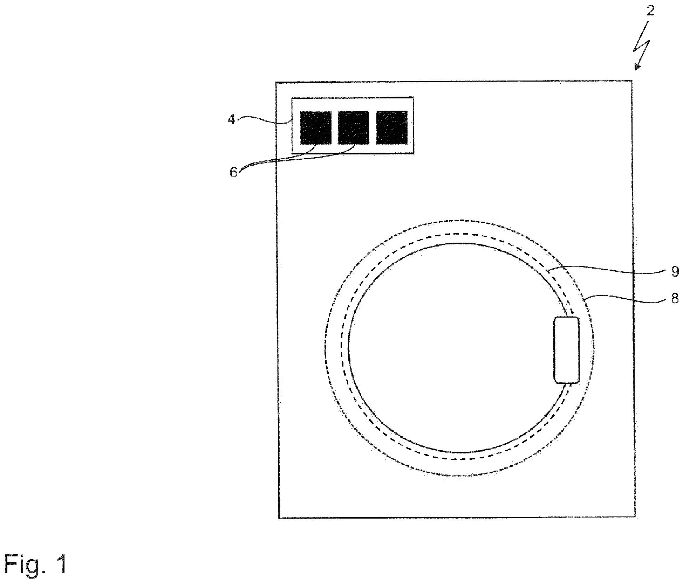

Zunächst wird auf Figur 1 verwiesen. Dort ist als Beispiel für ein flüssigkeitsführendes Haushaltsgerät eine Waschmaschine 2 dargestellt. Die Waschmaschine 2 umfasst einen Aufnahmebereich 4 zur Aufnahme eines oder mehrerer Flüssigkeitsbehälter 6. Die Flüssigkeitsbehälter 6 können aus dem Aufnahmebereich 4 entnehmbar oder fest in der Waschmaschine 2 verbaut sein. In diesem Beispiel sind die Flüssigkeitsbehälter 6 jeweils zur Aufnahme von flüssigem Waschmittel ausgelegt. Die Waschmaschine 2 umfasst ferner einen Arbeits-Nassraum 8 mit einer Trommel 9 zur Aufnahme von Wäsche. Zu Beginn eines Waschvorgangs wird der Arbeits-Nassraum 8 zumindest teilweise mit Flüssigkeit befüllt, insbesondere mit Frischwasser oder/und Waschmittel. Durch Lösen von Schmutz aus der Wäsche liegt nach einer Weile verunreinigtes Brauchwasser im Arbeits-Nassraum 8 vor. Es kann vorteilhaft sein, einen Füllzustand von Flüssigkeit in unterschiedlichen Raumbereichen der Waschmaschine 2 festzustellen. Insbesondere kann ein aktueller Pegel von flüssigem Waschmittel in den einzelnen Flüssigkeitsbehältern 6 oder/und eine Füllhöhe von Flüssigkeit in dem Arbeits-Nassraum 8 von Interesse sein.

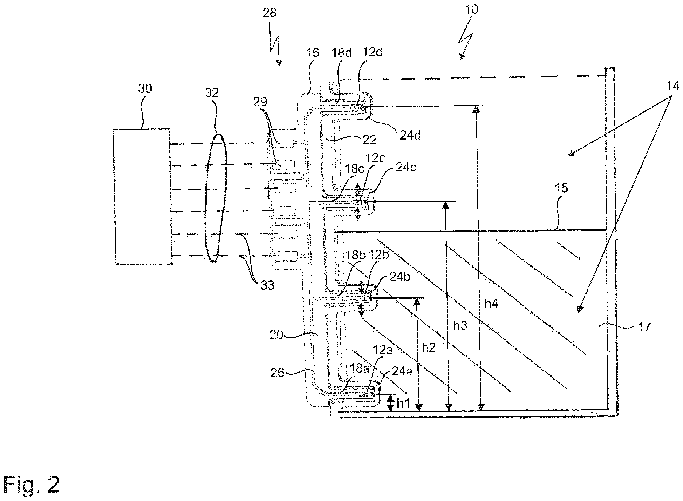

Es wird ein Sensorsystem 10 für ein flüssigkeitsführendes Haushaltsgerät, insbesondere für die Waschmaschine 2 bereitgestellt. Das Sensorsystem 10 umfasst, wie im Ausführungsbeispiel gemäß Figur 2 angedeutet, ein oder mehrere Detektionselemente 12 bzw. 12a-12d, die jeweils zur Detektion eines Wärmestroms ausgelegt sind. Das Sensorsystem 10 ist hierbei ausgelegt, alle Detektionselemente 12 neben einem zur Aufnahme von Flüssigkeit 17 ausgelegten Raumbereich 14 des Haushaltsgeräts 2 anzuordnen. Bei diesem Raumbereich 14 kann es sich beispielsweise um den Innenraum eines der Flüssigkeitsbehälter 6 oder um den Arbeits-Nassraum 8 handeln. Die einzelnen Detektionselemente 12 können aufgrund dieser Anordnung einen Wärmestrom detektieren, der zwischen dem jeweiligen Detektionselement 12 und dem Raumbereich 14 fließt. In Fig. 2 ist der Wärmestrom für die Detektionselemente 12c und 12d durch Pfeile angedeutet. Da dieser Wärmestrom maßgeblich von einem Medium in dem Raumbereich 14 neben dem jeweiligen Detektionselement 12 beeinflusst ist, indiziert der jeweilige Wärmestrom einen aktuellen Flüssigkeitspegel 15 im Raumbereich 14. Wenn der Raumbereich 14 neben einem Detektionselement 12 mit Flüssigkeit 17 gefüllt ist wie im Fall der Detektionselemente 12a, 12b, kann eine Wärmemenge zwischen dem entsprechenden Detektionselement 12a, 12b und dem Raumbereich 14 rascher übertragen werden, als wenn der Raumbereich 14 neben einem Detektionselement 12 leer bzw. mit Gas gefüllt ist wie im Fall der Detektionselemente 12c, 12d.

Wie in Fig. 2 zu sehen, können die Detektionselemente 12 auf unterschiedlichen Höhen h1-h4 in Bezug auf den Raumbereich 14 angeordnet werden. Im gezeigten Beispielfall indizieren die von den beiden unteren Detektionselementen 12a, 12b detektierten Wärmeströme, dass der Flüssigkeitspegel 15 die Installationshöhen h1, h2 dieser beiden Detektionselemente 12a, 12b aktuell überschreitet. Die von den beiden oberen Detektionselementen 12c, 12d detektierten Wärmeströme indizieren hingegen, dass der Flüssigkeitspegel 15 die Installationshöhen h3, h4 dieser beiden oberen Detektionselemente 12c, 12d aktuell unterschreitet. So wird eine mehrstufige Detektion des Füllstands 15 der Flüssigkeit 17 im Raumbereich 14 ermöglicht, selbst wenn ein jedes Detektionselement 12 nur eine binäre Detektion gestattet, ob es gerade unterhalb oder oberhalb des Flüssigkeitspegels liegt.

Das eine bzw. die mehreren Detektionselemente 12 können so ausgelegt sein, dass sie sich bei Versorgung mit elektrischer Heizleistung erwärmen oder/und bei Versorgung mit elektrischer Kühlleistung abkühlen. Es ist denkbar, dass ein Detektionselement 12 hierfür ein Heiz- oder/und Kühlelement umfasst wie beispielsweise einen Heizwiderstand oder ein Peltier-Element. Ein jedes Detektionselement 12 ist so ausgelegt, dass es ein Messsignal bereitstellen kann, das direkt oder indirekt eine Temperatur des Detektionselements anzeigt. Insbesondere kann das Detektionselement 12 durch ein einziges elektrisches Bauteil gebildet sein, beispielsweise durch einen NTC- oder PTC-Thermistor, eine Diode oder einen Transistor. Die Temperatur des Detektionselement 12 kann durch einen aktuellen elektrischen Zustand desselben, insbesondere durch dessen aktuellen elektrischen Widerstand, den das Detektionselement 12 aktuell durchfließenden Strom oder/und die aktuell über das Detektionselement 12 abfallende Spannung angezeigt werden. Das Messsignal kann (z.B. direkt, invers, linear oder anderweitig) proportional zu dem aktuellen elektrischen Zustand des Detektionselements 12 sein oder den aktuellen elektrischen Zustand wiedergeben.

In dem Ausführungsbeispiel gemäß Figur 2 umfasst das Sensorsystem 10 eine (z.B. gedruckte) Leiterplatte 16, die im Wesentlichen planar ausgebildet ist. Die Leiterplatte 16 umfasst eine Mehrzahl von fingerförmigen Fortsätzen 18 bzw. 18a-18d, die sich von einem Hauptabschnitt 20 der Leiterplatte 16 weg erstrecken. Jeder dieser Fortsätze 18 trägt ein einzelnes Detektionselement 12. Die Fortsätze 18 verlaufen im gezeigten Beispielfall parallel und erstrecken sich vom Hauptabschnitt 20 in Richtung des Raumbereichs 14. Die Detektionselemente 12 sind somit von dem Hauptabschnitt 20 der Leiterplatte 16 in Richtung des Raumbereichs 14 beabstandet.

Das Sensorsystem 10 umfasst ferner eine Trennwand 22, die zwischen der Leiterplatte 16 und dem Raumbereich 14 angeordnet ist. Der Raumbereich 14 kann wie in Fig. 2 gezeigt direkt an die Trennwand 22 angrenzen. Die Trennwand 22 kann insbesondere ein Teil des Flüssigkeitsbehälters 6 sein. Im Ausführungsbeispiel gemäß Fig. 2 umfasst die Trennwand 22 mehrere Ausstülpungen 24 bzw. 24a-24d. Jede der Ausstülpungen 24 ist zur Aufnahme eines einzelnen Fortsatzes 18 der Leiterplatte 16 ausgebildet. Eine jede Ausstülpung 24 haust also einen jeweiligen Fortsatz 18 mit dem darauf angeordneten Detektionselement 12 ein. Die Trennwand 22 kann aus Kunststoff, insbesondere spritzgegossenem Kunststoff bestehen und eine Wandstärke von wenigen Millimetern oder einigen Hundert Mikrometern aufweisen, insbesondere im Bereich der Ausstülpungen 24. Das jeweilige Detektionselement 12 wird also in mehreren Raumrichtungen von der Trennwand 22 und von dem Raumbereich 14 umgeben. Dies stellt sicher, dass ein Großteil von Abwärme von dem Detektionselement 12 in Richtung des Raumbereichs 14 anstatt in Richtung des Hauptabschnitts 20 übertragen wird, was letztendlich eine zuverlässigere Detektion des Flüssigkeitspegels 15 im Raumbereich 14 gestattet.

Auf der Leiterplatte 16 können Leiterbahnen 26 zur elektrischen Kontaktierung der Detektionselemente 12 vorgesehen sein. Da die Trennwand 22 sicherstellt, dass keine Flüssigkeit 17 aus dem Raumbereich 14 auf die Leiterplatte 16 trifft, können diese Leiterbahnen 26 offen liegen bzw. unisoliert sein. Die Leiterplatte 16 kann eine elektrische Schnittstelle 28 umfassen, an die die Leiterbahnen 26 angebunden sind. Die elektrische Schnittstelle 28 kann insbesondere als Steckkontakt ausgebildet sein. Im gezeigten Ausführungsbeispiel ist die elektrische Schnittstelle 28 weiter von dem Raumbereich 14 beanstandet als die Fortsätze 18, bzw. die Schnittstelle 28 ist auf einer anderen Seite des Hauptabschnitts 20 angeordnet als die Detektionselemente 12.

Das Sensorsystem 10 kann auch eine Steuereinheit 30 umfassen. Die Steuereinheit 30 kann an der Leiterplatte 16 befestigt sein. Die Steuereinheit 30 umfasst insbesondere einen Mikrocontroller, der auf der Leiterplatte 16 angeordnet ist. Alternativ kann die Steuereinheit 30, wie in Fig. 2 angedeutet, über eine Kabelverbindung 32 an die Leiterplatte 16 angeschlossen werden. In diesem Fall kann die Steuereinheit 30 Teil eines zentralen Steuergeräts des Haushaltsgeräts 2 sein, das zum Steuern von Funktionen des Haushaltsgeräts 2 dient, zum Beispiel zum Steuern von Pumpen oder/und Motoren des Haushaltsgeräts 2 während eines Waschgangs, insbesondere auf Grundlage eines von der Steuereinheit 30 bestimmten Werts, der einen von den jeweiligen Detektionselement 12 detektieren Wärmestrom oder/und den Füllstand 15 von Flüssigkeit 17 im Raumbereich 14 anzeigt.

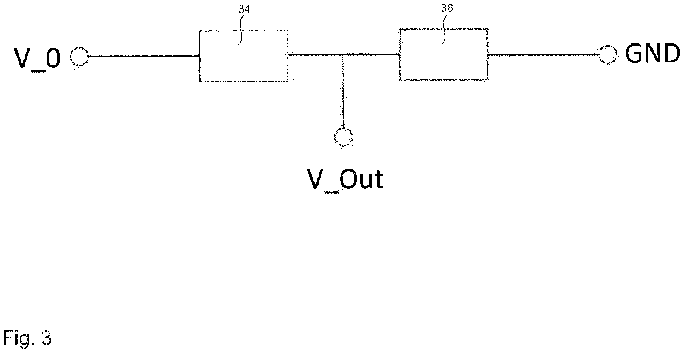

In Fig. 3 ist eine beispielhafte Auswertungsschaltung gezeigt. Die Schaltung stellt einen Spannungsteiler mit zwei Widerstandselementen 34, 36 dar. Ein erstes dieser beiden Widerstandselemente entspricht einem Detektionselement 12, beispielsweise einem NTC-Thermistor. Es versteht sich, dass anstelle eines NTC-Thermistors auch ein anderes elektronisches Bauteile eingesetzt werden kann, das ein temperaturabhängiges elektrisches Verhalten aufweist. Ein zweites dieser beiden Widerstandselemente kann einem elektrischen Widerstand oder einer Gruppe aus mehreren elektrischen Widerständen und ggf. weiteren elektrischen Bauteilen entsprechen. Das zweite der beiden Widerstandselemente kann insbesondere einen geringeren Temperaturkoeffizienten, also eine geringere Widerstandsänderung in Abhängigkeit von der Temperatur aufweisen als das erste der beiden Widerstandselemente. Das zweite der beiden Widerstandselemente kann auf der Leiterplatte 16, insbesondere auf dem Hauptabschnitt 20 der Leiterplatte 16 angeordnet sein. Das erste der beiden Widerstandselemente kann dem Widerstandselement 34 aus Fig. 3 und das zweite der beiden Widerstandselemente dem Widerstandselement 36 aus Fig. 3 entsprechen, oder umgekehrt.

Es ist ausreichend, die Leiterplatte 16 mit einer einheitlichen Versorgungsspannung V_0 oder einem einheitlichen Erdungspotential GND zu versorgen, und von jedem einzelnen Detektionselement 12 die Ausgangsspannung V_Out abzugreifen. Es kann für eine Gruppe von Detektionselementen 12, oder für alle Detektionselemente 12, dieselbe Versorgungsspannung V_0 oder/und dasselbe Erdungspotenzial GND bereitgestellt werden, beispielsweise über denselben Draht 33 der Kabelverbindung 32, denselben elektrischen Kontakt der elektrischen Schnittstelle 28 oder/und dieselbe Leiterbahn 26 auf der Leiterplatte 16. Hingegen sollte das Messsignal in Form der Spannung V_Out für jedes Detektionselement einzeln übertragbar sein, also hierfür pro Detektionselement 12 ein separater Draht 33 der Kabelverbindung 32, ein separater elektrischer Kontakt 29 oder/und eine separate Leiterbahn 26 auf der Leiterplatte 16 vorgesehen sein.

In einem vorteilhaften Ausführungsbeispiel ist das zweite der beiden Widerstandselemente separat von der Leiterplatte 16 angeordnet, beispielsweise als Teil der Steuereinheit 30. In anderen Worten kann das Sensorsystem 10 so ausgelegt sein, dass die elektrische Schnittstelle 28 eine Gesamtzahl G von elektrischen Kontakten 29 umfasst, für die in Bezug auf die Gesamtanzahl D der Detektionselemente 12 gilt: G ≤ 3*D oder G ≤ 2*D oder G ≤ 1.5*D oder G ≤ D+2 oder G ≤ D+1. Selbiges gilt für die Gesamtzahl Z von Drähten 33 der Kabelverbindung 32, die zur Verbindung der Steuereinheit 30 mit der Leiterplatte 16 notwendig sind, also G = Z oder/und für die Gesamtzahl L von separaten Leiterbahnen 26 auf der Leiterplatte 16, also G = L.

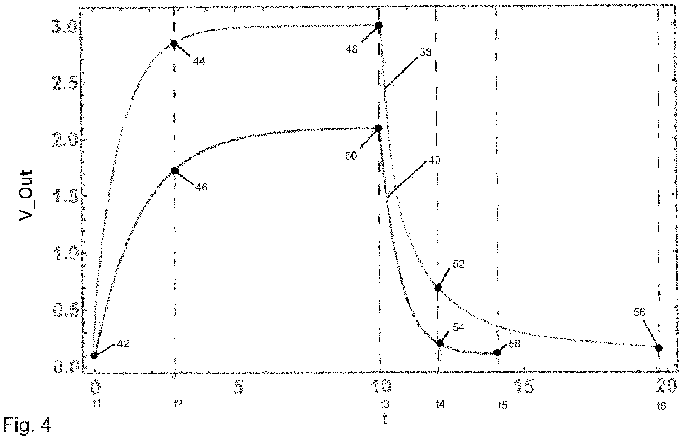

Die Steuereinheit 30 kann dazu ausgelegt sein, die Ausgangsspannung V_Out eines jeden Detektionselement 12 als Messsignale zu erhalten. Auf Grundlage dieser Messsignale kann die Steuereinheit 30 einen Wert bestimmen, der einen von den jeweiligen Detektionselement 12 detektieren Wärmestrom oder/und den Füllstand 15 von Flüssigkeit 17 im Raumbereich 14 anzeigt. In Fig. 4 sind zwei beispielhafte Kurven 38, 40 dargestellt, die unterschiedliche Messsignale repräsentieren. Die Kurve 38 stellt die Spannung V_Out an einem Detektionselement 12 für den Fall dar, dass in dem Raumbereich 14 neben dem entsprechenden Detektionselement 12 keine Flüssigkeit 17 steht. Die Kurve 40 stellt hingegen die Spannung V_Out an demselben Detektionselement 12 für den Fall dar, dass in dem Raumbereich 14 neben dem Detektionselement 12 Flüssigkeit steht.

Im Zeitraum 0 < t < 10 beaufschlagt die Steuereinheit 30 das Detektionselement 12 mit elektrischer Heizleistung, sodass das Detektionselement 12 erwärmt wird. Dieser Zeitraum kann als Heizzyklus bezeichnet werden. Durch die Erwärmung ändert sich der elektrische Widerstand des Detektionselements 12, wodurch sich wiederum die Spannung V_Out ändert. Im Beispiel aus Fig. 4 steigt die Spannung V_Out mit steigender Temperatur des Detektionselements 12 im Heizzyklus an. Im anschließenden Zeitraum 10 < t < 20 wird das Detektionselement 12 nicht mehr mit Heizleistung versorgt, sodass es sich abkühlt. Dieser Zeitraum kann als Kühlzyklus bezeichnet werden. Durch das Abkühlen verändert sich wiederum der elektrische Widerstand des Detektionselements 12, sodass sich auch beim Abkühlen die Spannung V_Out ändert. Im Beispiel aus Fig. 4 sinkt die Spannung V_Out mit sinkender Temperatur des Detektionselements 12 im Kühlzyklus. Die Einheiten auf der Abszisse und der Ordinate sind hier willkürlich gewählt, die Kurven sollen der Veranschaulichung dienen.

Der Verlauf der beiden unterschiedliche Messsignale repräsentierenden Kurven 38, 40 hängt unter anderem von vorbekannten Größen wie der Versorgungsspannung V_0, dem zweiten Widerstandselement, dem Material und der Wandstärke der Trennwand 22 sowie dem Temperaturkoeffizienten des Detektionselements 12 ab. Als weitere vorbekannte Größe kann eine Anfangstemperatur des Detektionselements 12 zu Beginn des Heizzyklus' herangezogen werden, die sich z.B. aus dem elektrischen Widerstandswert des Detektionselements 12 zu Beginn des Heizzyklus' ergibt. Neben den vorbekannten Größen hängt der Verlauf der beiden Kurven jedoch auch maßgeblich von dem zu detektierenden Wärmefluss zwischen dem Detektionselement 12 und dem Raumbereich 12 ab. Unter Kenntnis der vorbestimmten Größen kann anhand einem oder mehreren Messwerten eines Messsignals auf den Wärmefluss geschlossen werden, und damit auch darauf, ob der Raumbereich 14 neben dem diesem Messsignal zugeordneten Detektionselement 12 gerade von Gas (z.B. Luft) oder einer Flüssigkeit (z.B. flüssigem Waschmittel) gefüllt ist. Die Kenntnis der Einbauhöhe h dieses Detektionselements 12 lässt dann einen direkten Rückschluss auf den Füllstand der Flüssigkeit 15 zu.

In Fig. 4 sind beispielhafte Messwerte 42-56 der beiden unterschiedlichen Messsignale durch Punkte eingezeichnet. Es ist zu erkennen, dass die Spannung V_Out zum Zeitpunkt t1 zu Beginn des Heizzyklus' in beiden Fällen gleich groß ist (Messwert 42). Aus diesem Messwert 42 lässt sich die initiale Temperatur des Detektionselements 12 unter Kenntnis von dessen temperaturabhängigem elektrischen Widerstand, der Versorgungsspannung und dem elektrischen Widerstandswert des zweiten Widerstandselements ermitteln. Es kann davon ausgegangen werden, dass die initiale Temperatur des Detektionselements 12 einer Temperatur von Medium im Raumbereich 14 entspricht. Zum Zeitpunkt t2 während des Heizzyklus unterscheiden sich die Spannungswerte V_Out je nachdem, ob im Raumbereich neben dem Detektionselement 12 Flüssigkeit steht oder nicht. Die Wärmeabgabe von dem erwärmten Detektionselement 12 ist größer, wenn in dem Raumbereich 14 Flüssigkeit steht, die eine geringere Temperatur als das Detektionselement 12 hat. Der Messwert 44 oder 46 kann mit einem vorbestimmten Grenzwert verglichen werden, der insbesondere in Bezug auf die initiale Temperatur definiert ist, um zu bestimmen, ob in dem Raumbereich 14 neben dem Detektionselement 12 gerade Flüssigkeit oberhalb der Einbauhöhe h dieses Detektionselements 12 steht oder nicht. Die Zeitspanne t2-t1 kann vordefiniert sein oder anhand der initialen Temperatur des Detektionselements 12 gewählt werden. Es ist auch möglich, die Zeit zu messen, die notwendig ist, bis ein Messsignal einen vorbestimmten Grenzwert erreicht, der insbesondere in Bezug auf die initiale Temperatur definiert ist, um zu bestimmen, ob in dem Raumbereich 14 neben dem Detektionselement 12 gerade Flüssigkeit oberhalb der Einbauhöhe h dieses Detektionselements 12 steht oder nicht. Anstelle der Zeitspanne t2-t1 kann auch die Zeitspanne t3-t1 oder t3-t2 verwendet werden bzw. anstelle der Messwerte 44, 46 können die Messwerte 48, 50 verwendet werden. Die Messwerte 48, 50 können eine konstante Endtemperatur des Detektionselements 12 bei konstanter Heizleistung repräsentieren, welche von dem Wärmestrom und daher auch von dem Medium im Raumbereich 14 abhängt. Auch das Abkühlverhalten des Detektionselements 12 unterscheidet sich je nach Medium im Raumbereich 14, wie anhand der Messwerte 52, 54 deutlich wird. Die Messwerte 56, 58 repräsentieren wiederum eine konstante Endtemperatur des Detektionselements 12 nach Beendigung des Abkühlzyklus. Auch anhand der Messwerte 52, 54, 56 oder/und 58 sowie der zugehörigen Zeitpunkte t4, t5, t6 kann auf den Füllstand der Flüssigkeit im Raumbereich 14 geschlossen werden. Es ist auch denkbar, ein Messsignal oder eine entsprechende Kurve mit vorbekannten Referenzsignalen oder Referenzkurven abzugleichen, um zu bestimmen, ob in dem Raumbereich 14 neben dem Detektionselement 12, von dem das Messsignal erhalten wurde, gerade Flüssigkeit steht oder nicht. Auch andere Arten der Auswertung der Messsignale, insbesondere der Spannung V_Out, durch die Steuereinheit 30, sind denkbar.

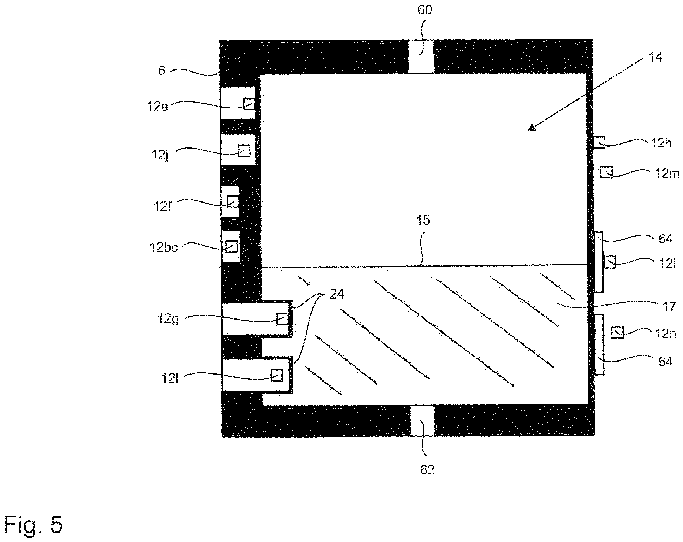

In Fig. 5 sind mehrere mögliche Anordnungen des Detektionselements 12 bzw. 12e-12n in Bezug auf einen Raumbereich 14 dargestellt. Das Sensorsystem 10 kann eines oder mehrere derart angeordnete Detektionselemente 12 umfassen.

Ein Detektionselement 12 kann entweder in Kontakt mit der Trennwand 22 stehen (vgl. 12e-12i), oder von dieser beanstandet sein (vgl. 12j-12n), insbesondere weniger als 5 mm, weniger als 4 mm, weniger als 3 mm, weniger 2 mm oder weniger als 1 mm. Die Trennwand 22 kann zwischen dem Detektionselement 12 und dem Raumbereich 14 eine beliebig wählbare Dicke aufweisen. Je geringer die thermische Leitfähigkeit des Materials der Trennwand 22, desto geringer sollte auch diese Dicke gewählt werden. Insbesondere kann die Trennwand zwischen dem Detektionselement 12 und dem Raumbereich 14 eine Dicke von weniger als 5 mm, weniger als 4 mm, weniger als 3 mm, weniger 2 mm oder weniger als 1 mm aufweisen.

Das Detektionselement 12 kann in eine Außenwand eines Flüssigkeitsbehälters 6 eingebettet sein (vgl. 12e, 12f, 12j, 12k), oder außerhalb von der Außenwand des Flüssigkeitsbehälters 6 angeordnet sein (vgl. 12h, 12i, 12m, 12n). Wie in Fig. 5 dargestellt, kann der Flüssigkeitsbehälter 6 einen mit dem Raumbereich 14 verbundenen Zulauf 60 für Flüssigkeit 17 und einen mit dem Raumbereich 14 verbundenen Ablauf 62 für die Flüssigkeit 17 umfassen.

Es ist ferner denkbar, auf der Trennwand 22, insbesondere auf der Außenwand des Flüssigkeitsbehälters 6, ein genau einem Detektionselement 12 zugeordnetes Ausgleichselement 64 vorzusehen, das insbesondere eine höhere thermische Leitfähigkeit aufweist als das Material Trennwand 22. Das Ausgleichselement 64 kann eine Wärmeübertragungsfläche zwischen dem Raumbereich 14 und dem Detektionselement 12 vergrößern. Das Detektionselement 12i steht in direktem Kontakt mit dem Ausgleichselement 64, während im Beispiel des Detektionselements 12n ein geringfügiger Abstand (z.B. im Millimeter- oder Sub-Millimeterbereich) zwischen Detektionselement und Ausgleichselement vorliegt. Wenn sich das Ausgleichselement 46 über mehrere Millimeter oder Zentimeter in Höhenrichtung erstreckt, ist sogar denkbar, anhand des Messsignals des einzigen Detektionselements 12i oder 12n, das diesem Ausgleichselement 46 zugeordnet ist, drei oder mehr Flüssigkeitspegel voneinander zu unterscheiden oder sogar eine stufenlose Detektion des Flüssigkeitspegels 15 im Bereich des Ausgleichselements 46 zu ermöglichen. Das Ausgleichselement 46 kann auch in die Trennwand 22 eingelassen sein oder einen Teil der Trennwand 22 bilden.

Vorteilhafterweise wird zumindest ein Detektionselement aus einer Mehrzahl von Detektionselementen als Referenzdetektionselement betrieben. Es sind somit zumindest zwei Detektionselemente vorhanden. Vorteilhafterweise ist das Referenzdetektionselement in einem oberen Bereich des Flüssigkeitsbehälters angeordnet. Dieser Bereich befindet sich über dem maximalen Füllstand, so dass in der Regel in diesem Bereich keine Flüssigkeit sich befindet. Es wird somit durch das zumindest eine Referenzdetektionselement ein Wärmestrom zu dem verbleibenden Medium in dem Flüssigkeitsbehälter gemessen. Dieses verbleibende Medium ist in der Regel Luft. Denkbar wäre auch, dass das zumindest ein Referenzelement den Wärmestrom zu der den Flüssigkeitsbehälter umgebenden Luft bestimmt.

Der von dem Referenzdetektionselement gemessene Wert wird somit als Referenz bei einer Auswertung verwendet. Bei der Auswertung kann vorteilhafterweise ein Quotient aus dem gemessenen Wert des Referenzdetektionselements und dem gemessenen Wert eines oder mehrerer weiterer Detektionselemente gebildet werden. Befindet sich das zumindest eine weitere Detektionselement über dem Füllstand so wird ein Messwert bezüglich eines Wärmestroms zu dem verbleibenden Medium beispielsweise Luft gemessen. Der sich in der Auswertung ergebende Quotient entspricht somit im Wesentlichen dem Wert 1. Eine Abweichung von diesem Wert 1 bedeutet somit, dass eine Wärmestrom zu der Flüssigkeit erfolgt. Durch die Nutzung zumindest eines Detektionselements aus einer Mehrzahl von Detektionselementen als Referenzdetektionselement ergibt sich somit eine einfachere Möglichkeit zur Auswertung.

Nach einer weiteren bevorzugten umfasst das Sensorsystem mehrere Detektionselemente, welche in Reihe geschaltet sind. Die Detektionselemente sind somit Widerstandselemente eines Spannungsteilers mit zumindest einem weiteren Widerstandselement. Zur Auswertung wird der Strom durch die gesamten Detektionselemente beziehungsweise eine Änderung dieses Stromes verwendet. Durch eine solche Ausgestaltung erübrigt sich ein Abgriff an den einzelnen Detektionselements, wodurch das Sensorsystem kostengünstiger hergestellt werden kann.

Ferner kann ein weiteres Widerstandselement vorgesehen sein, welches geeignet und dafür vorgesehen ist das zumindest eine Detektionselement zu erwärmen. Dieses zumindest eine Widerstandselement kann in Reihe oder parallel zu dem zumindest einen Detektionselement geschalten sein.

Es versteht sich, dass die hier beschriebenen Ausführungsbeispiele miteinander kombiniert werden können. Auch muss die Sensoreinheit 10 nicht alle der unter Bezugnahme auf die Figuren beschriebenen Merkmale aufweisen. Weitere technische Wirkungen und Vorteile der hier beschriebenen Erfindung können sich dem Fachmann bei Studium der vorliegenden Offenbarung erschließen.

## Patentansprüche

1. Sensorsystem (10) für ein flüssigkeitsführendes Haushaltsgerät (2), insbesondere eine Waschmaschine, wobei das Sensorsystem (10) zumindest ein Detektionselement (12) zur Detektion eines Wärmestroms umfasst und ausgelegt ist, das zumindest eine Detektionselement (12) im Haushaltsgerät (2) neben einem zur Aufnahme von Flüssigkeit ausgelegten Raumbereich (14) so anzuordnen, dass das zumindest eine Detektionselement (12) einen Wärmestrom zwischen dem zumindest einen Detektionselement (12) und dem Raumbereich (14) detektieren kann, der einen Füllstand von Flüssigkeit, insbesondere Waschflüssigkeit, in dem Raumbereich (14) anzeigt.

2. Sensorsystem (10) nach Anspruch 1, dazu ausgelegt, das zumindest eine Detektionselement (12) auf einer vorbestimmten Höhe neben dem Raumbereich (14) so anzuordnen, dass das zumindest eine Detektionselement (12) einen Wärmestrom zwischen dem zumindest einen Detektionselement (12) und dem Raumbereich (14) detektieren kann, der anzeigt, ob der Füllstand die vorbestimmte Höhe unterschreitet oder überschreitet.

3. Sensorsystem (10) nach Anspruch 1 oder 2, wobei das zumindest eine Detektionselement (12) dazu eingerichtet ist, durch Versorgung mit elektrischer Energie erwärmt oder/und abgekühlt zu werden und ein Messsignal bereitzustellen, das eine Temperatur des Detektionselements (12) anzeigt.

4. Sensorsystem (10) nach einem der Ansprüche 1 bis 3, umfassend eine Leiterplatte (16) mit einem Hauptabschnitt (20) und zumindest einem von dem Hauptabschnitt (20) abstehenden fingerförmigen Fortsatz (18), der das zumindest eine Detektionselement (12) trägt.

5. Sensorsystem (10) nach Anspruch 4, wobei der zumindest eine fingerförmige Fortsatz (18) ausgelegt ist, sich von dem Hauptabschnitt (20) der Leiterplatte in Richtung des Raumbereichs (14) des Haushaltsgeräts (2) zu erstrecken oder/und wobei zwei oder mehr des zumindest einen fingerförmigen Fortsatzes (18) im Wesentlichen parallel verlaufen.

6. Sensorsystem (10) nach einem der Ansprüche 1 bis 5, wobei das zumindest eine Detektionselement (12) auf einer Leiterplatte (16) angeordnet ist und ein erstes Widerstandselement eines Spannungsteilers mit zumindest zwei Widerstandselementen bildet, wobei ein oder mehr, insbesondere alle, der weiteren Widerstandselemente des Spannungsteilers getrennt von der Leiterplatte (16) angeordnet sind.

7. Sensorsystem (10) nach einem der Ansprüche 1 bis 6, ferner umfassend eine Trennwand (22), wobei das Sensorsystem (10) ausgelegt ist, das zumindest eine Detektionselement (12) im Haushaltsgerät (2) wenigstens durch die Trennwand (22) getrennt von dem Raumbereich (14) anzuordnen, wobei die Trennwand (22) optional zumindest einen Teil eines Flüssigkeitsbehälters (6) bildet, der den Raumbereich (14) einfasst.

8. Sensorsystem (10) nach Anspruch 7, wobei die Trennwand (22) zumindest eine Ausstülpung (24) aufweist, die in Richtung des Raumbereichs (14) ausgebildet ist, und wobei das zumindest eine Detektionselement (12) in der zumindest einen Ausstülpung (24) angeordnet ist.

9. Sensorsystem (10) nach einem der Ansprüche 1 bis 8, ferner umfassend eine Steuereinheit (30), die dazu eingerichtet ist, eines oder mehrere Messsignale des zumindest einen Detektionselements (12) zu erhalten und daraus einen Wert zu bestimmen, der den von dem zumindest einen Detektionselement (12) detektierten Wärmestrom oder/und den Füllstand von Flüssigkeit im Raumbereich (14) anzeigt.

10. Sensorsystem (10) nach Anspruch 9, wobei die Steuereinheit (30) dazu eingerichtet ist, ein Erwärmen oder/und Abkühlen das zumindest einen Detektionselements (12) zu bewirken, und basierend auf einem durch das bzw. die Messsignale angezeigten Temperaturverhalten des Detektionselements (12) den Wert zu bestimmen.

11. Sensorsystem (10) nach einem der vorhergehenden Ansprüche, wobei zumindest ein Detektionselement (12) aus einer Mehrzahl von Detektionselementen (12) als Referenzdetektionselement (12) betrieben wird, wobei dieses zumindest eine Referenzdetektionselement (12) einen Wärmestrom zwischen dem zumindest einen Referenzdetektionselement (12) und dem Raumbereich (14) oder der Umgebung des Raumbereichs detektieren kann, wobei das zumindest eine Referenzdetektionselement (12) nicht dafür vorgesehen ist einen Wärmestrom zwischen dem zumindest einen Referenzdetektionselement (12) und einer sich in dem Raumbereich (14) befindlichen Flüssigkeit zu detektieren.

12. Sensorsystem (10) nach Anspruch 6, wobei das Sensorsystem (10) mehrere Detektionselemente (12) umfasst, welche in Reihe geschaltet sind.

13. Sensorsystem (10) nach Anspruch 3, wobei zumindest ein Widerstandselement vorgesehen ist, welches geeignet und dafür vorgesehen ist das zumindest eine Detektionselement (12) zu erwärmen, wobei das zumindest eine Widerstandselement in Reihe oder parallel zu dem zumindest einen Detektionselement (12) geschalten ist.

14. Haushaltsgerät (2), insbesondere Waschmaschine, umfassend das Sensorsystem (10) nach einem der Ansprüche 1 bis 13.
